(19) Europäisches Patentamt
European Patent Office
Office européen des brevets

(11) EP 3 792 305 B1

(12) **EUROPEAN PATENT SPECIFICATION**

(45) Date of publication and mention of the grant of the patent:
**27.03.2024 Bulletin 2024/13**

(21) Application number: **20816080.4**

(22) Date of filing: **02.03.2020**

(51) International Patent Classification (IPC):
***C08K 5/3447*** (2006.01) ***C08L 83/04*** (2006.01)
***C08L 101/12*** (2006.01) ***C08K 3/01*** (2018.01)
***C08K 3/013*** (2018.01) ***C08K 3/22*** (2006.01)
***C08K 3/28*** (2006.01) *C08K 3/36* (2006.01)
*C08K 3/38* (2006.01)

(52) Cooperative Patent Classification (CPC):
(C-Sets available)
**C08K 3/013; C08K 5/3447; C08L 83/04;**
C08K 3/36; C08K 2003/222; C08K 2003/2227;
C08K 2003/282; C08K 2003/385; C08K 2201/014

(Cont.)

(86) International application number:
**PCT/JP2020/008572**

(87) International publication number:
**WO 2020/261647 (30.12.2020 Gazette 2020/53)**

(54) **HEAT-TOLERANT THERMALLY CONDUCTIVE COMPOSITION AND HEAT-TOLERANT THERMALLY CONDUCTIVE SHEET**

HITZEBESTÄNDIGE WÄRMELEITENDE ZUSAMMENSETZUNG UND HITZEBESTÄNDIGE WÄRMELEITENDE FOLIE

COMPOSITION THERMOCONDUCTRICE TOLÉRANTE À LA CHALEUR ET FEUILLE THERMOCONDUCTRICE TOLÉRANTE À LA CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2019 JP 2019116298**

(43) Date of publication of application:
**17.03.2021 Bulletin 2021/11**

(73) Proprietor: **Fuji Polymer Industries Co., Ltd.**
**Nagoya-shi, Aichi 450-0002 (JP)**

(72) Inventors:
- **NAKAJIMA, Yuji**
  **Nagoya-shi, Aichi 463-0026 (JP)**
- **SUZUMURA, Katsuyuki**
  **Nagoya-shi, Aichi 463-0026 (JP)**

(74) Representative: **Diehl & Partner**
**Patent- und Rechtsanwaltskanzlei mbB**
**Erika-Mann-Straße 9**
**80636 München (DE)**

(56) References cited:
**EP-A1- 3 467 044**
**WO-A1-2016/199535**
**JP-A- H04 198 174**
**JP-A- 2001 301 025**
**US-A1- 2016 168 951**
**US-B1- 6 169 142**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 792 305 B1

(52) Cooperative Patent Classification (CPC): (Cont.)

C-Sets
**C08K 5/3447, C08L 83/04;**
**C08L 83/04, C08K 3/22, C08K 5/3447, C08K 5/56, C08K 9/06, C08L 83/00**

## Description

### Technical Field

The present invention relates to a heat-resistant thermally conductive composition and a heat-resistant thermally conductive sheet suitable for being interposed between a heat generating part and a heat dissipater of an electrical component, an electronic component or the like.

### Background Art

Recently, the performance of semiconductors such as CPUs has improved appreciably, and the amounts of heat generated by the semiconductors have increased enormously. To cope with this, heat dissipaters are attached to electronic components that generate heat, and thermally conductive silicone sheets are adopted to improve the contact between the semiconductors and the heat dissipaters. Further, along with the size reduction, high performance, and high integration of devices, the thermally conductive silicone sheets are required to have softness and high thermal conductive properties. Conventionally, Patent Documents 1 to 4 propose thermally conductive silicone gel sheets. Patent Document 5 discloses a thermally conductive silicone composition having a polyorganosiloxane as a base polymer and containing 60% to 95 mass% of a thermally conductive filler including aluminum nitride having an average particle size of 10 - 100 μm and crushed alumina having an average particle size of 0.1 - 5 μm.

### Prior Art Documents

#### Patent Documents

Patent Document 1: WO 2018/016566 A1
Patent Document 2: JP 5931129 B2
Patent Document 3: WO 2018/074247 A1
Patent Document 4: JP 2017-210518 A
Patent Document 5: EP 3 467 044 A1

### Disclosure of Invention

#### Problem to be Solved by the Invention

However, conventional thermally conductive silicone sheets have relatively high heat resistance, but still have been required to have higher heat resistance. Specifically, highly thermally conductive silicone sheets become hard at high temperature due to an increase in the amount of a filler filled or the use of a highly thermally conductive filler, and thus need to be improved.
Moreover, in the semiconductor field, the contamination by metal impurities has been a problem, and thus there has been a demand for heat-dissipating members that do not contain a heat resistance improver or a pigment made of a metal oxide or a metal complex.

To solve the above conventional problems, the present invention provides a heat-resistant thermally conductive composition and a heat-resistant thermally conductive sheet that use a heat resistance improver containing no metal atom and that are less likely to become hard at high temperature.

#### Means for Solving Problem

A heat-resistant thermally conductive composition of the present invention contains a matrix resin and thermally conductive particles. The heat-resistant thermally conductive composition contains a benzimidazolone compound as a heat resistance improver.

A heat-resistant thermally conductive sheet of the present invention includes the heat-resistant thermally conductive composition in the form of a sheet.

#### Effects of the Invention

In the present invention, the heat-resistant thermally conductive composition according to claim 1 contains a

matrix resin and thermally conductive particles, and contains a benzimidazolone compound as a heat resistance improver. Thus, the present invention can provide the heat-resistant thermally conductive composition and the heat-resistant thermally conductive sheet according to claim 12 that are less likely to become hard at high temperature. The benzimidazolone compound is usually known to be added as a pigment, but exhibits unpredictable effects of improving heat resistance. Moreover, the heat-resistant thermally conductive composition and the heat-resistant thermally conductive sheet use the heat resistance improver containing no metal atom and are less likely to become hard at high temperature. Thus, they are largely advantageous for electrical components and electronic components.

Brief Description of Drawings

[FIG. 1] FIGS. 1A to 1B are diagrams illustrating a method of measuring a thermal conductivity of a sample in an example of the present invention.

Description of the Invention

The present invention relates to a heat-resistant thermally conductive composition that contains a matrix resin and thermally conductive particles and that contains a benzimidazolone compound as a heat resistance improver. It is preferable that the matrix resin includes thermosetting resins such as silicone rubber, silicone gel, acrylic rubber, fluorocarbon rubber, epoxy resin, phenol resin, unsaturated polyester resin, melamine resin, acrylic resin, silicone resin, and fluorocarbon resin. Among these, silicone is preferred because of its high heat resistance, and may be selected from elastomer, gel, putty, grease, and oil. Any curing system such as a peroxide system, an addition system, or a condensation system may be used. Moreover, an addition-curable silicone polymer is preferred because the addition-curable silicone polymer is not corrosive to the surroundings, releases less by-products outside the system, and is cured to its core reliably.

It is preferable that the thermally conductive particles are inorganic particles such as alumina, zinc oxide, magnesium oxide, aluminum nitride, boron nitride, aluminum hydroxide, and silica. These inorganic particles may be added alone or in combination of two or more. If the matrix resin is 100 parts by mass, the thermally conductive particles are added preferably in an amount of 100 to 4000 parts by mass, and more preferably in an amount of 500 to 3000 parts by mass.

Part or all of the thermally conductive p articles used in the present invention may be surface treated with a silane coupling agent. The silane coupling agent may be mixed with the thermally conductive particles in advance to pretreat the thermally conductive particles or may be added when the matrix resin, a curing catalyst, and the thermally conductive particles are mixed (integral blend method). In the case of the integral blend method, it is preferable that the silane coupling agent is added in an amount of 0.01 to 10 parts by mass with respect to 100 parts by mass of the thermally conductive particles that are not surface treated and used for the heat-resistant thermally conductive composition of the present invention. The surface treated thermally conductive particles are easily incorporated into the matrix resin, prevent the curing catalyst from being adsorbed on the thermally conductive particles, and thus have the effects of preventing cure inhibition. This is useful for storage stability.

The benzimidazolone compound used in the present invention is added preferably in an amount of 0.001 to 5 parts by mass, more preferably in an amount of 0.001 to 3 parts by mass, and further preferably in an amount of 0.001 parts by mass or more and 0.5 parts by mass or less with respect to 100 parts by mass of the heat-resistant thermally conductive composition. If the amount is less than 0.001 parts by mass, the benzimidazolone compound has few effects of improving heat resistance. If the amount is more than 5 parts by mass, the benzimidazolone compound has heat resistance effects, but is disadvantageous in terms of cost.

The benzimidazolone compound has a benzimidazolone moiety in its skeleton and includes a benzimidazolone pigment. Examples of the benzimidazolone pigment include: Pigment Yellow 120 (hereinafter, PY), PY 151, PY 154, PY 175, PY 180, PY 181, and PY 194; Pigment Orange 36 (hereinafter, PO), PO 60, PO 62, and PO 72; Pigment Red 171 (hereinafter, PR), PR 175, PR 176, PR 185, and PR 208; Pigment Violet 32 (hereinafter, PV 32); and Pigment Brown 25 (hereinafter, PBr 25). The pigments are indicated by color index (C.I.) names and numbers jointly established by the Society of Dyers and Colourists and the American Association of Textile Chemists and Colorists. The structure of Pigment Yellow 181 as an example of the benzimidazolone pigment is expressed by the following formula (Chemical Formula 1). The compound is expressed as 4'-carbamoyl-4-[1-(2,3-dihydro-2-oxo-1H-benzimidazol-5-ylcarbamoyl)acetonylazo]benzanilide. Although a mechanism in which the addition of the benzimidazolone compound improves heat resistance is not clear, it is considered that the compound absorbs or suppresses substances that may cause the thermal decomposition such as thermal radicals produced at high temperature.

[Chemical Formula 1]

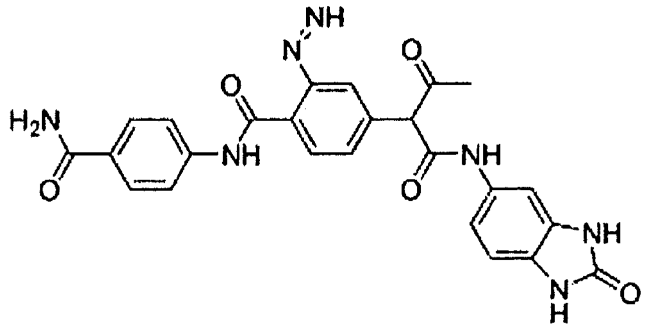

The heat-resistant thermally conductive composition has an Asker C hardness of preferably 70 or less, and more preferably 50 or less after curing. The hardness (i.e., softness) of the composition is sufficient when the Asker C hardness is 70 or less.

In the present invention, the heat resistance is evaluated with a rate of increase in the Asker C hardness at a temperature of 150°C or 220°C after an exposure time of 250 hours or more. The rate of increase in the hardness is kept at preferably 80% or less, and more preferably 61% or less as compared with the case where the composition does not contain the benzimidazolone compound. If the rate of increase in the hardness is 80% or less, the heat resistance is sufficient for practical use.

It is preferable that the heat-resistant thermally conductive composition of the present invention is formed into a sheet. The heat-resistant thermally conductive composition in the form of a sheet is suitable for being mounted onto an electronic component or the like. The heat-resistant thermally conductive sheet has a thickness of preferably 0.2 to 10 mm. The heat-resistant thermally conductive sheet has a thermal conductivity of preferably 0.8 W/m·K or more, and more preferably 1.0 W/m·K or more. If the thermal conductivity is 0.8 W/m-K or more, the heat-resistant thermally conductive sheet is suitable for conducting heat from a heat generating part to a heat dissipater.

It is preferable that the heat-resistant thermally conductive composition has a dielectric breakdown voltage (JIS K6249) of 11 to 16 kV/mm. Thus, it is possible to obtain a heat-resistant thermally conductive sheet having high electrical insulation properties.

It is preferable that the heat-resistant thermally conductive composition has a volume resistivity (JIS K6249) of $10^{10}$ to $10^{14}$ $\Omega$ cm. Thus, it is possible to obtain a heat-resistant thermally conductive sheet having high electrical insulation properties.

It is preferable that the heat-resistant thermally conductive composition of the present invention contains the following components (A) to (E), and optionally the following components (F), (G), and (H), and is cured.

(A) Base polymer component: an organopolysiloxane having an average of two or more silicon atoms bonded to alkenyl groups per molecule.

(B) Crosslinking component: an organopolysiloxane having an average of two or more silicon atoms bonded to hydrogen atoms per molecule, in which the amount of the organopolysiloxane is 0.01 to 3 mol with respect to 1 mol of the alkenyl groups bonded to the silicon atoms in the component A.

(C) Catalyst component: a platinum group metal catalyst, in which the amount of the platinum group metal catalyst is 0.01 to 1000 ppm in terms of the weight unit of metal atoms with respect to the total amount of the component A and the platinum group metal catalyst.

(D) Thermally conductive particles: 100 to 4000 parts by mass with respect to 100 parts by mass of an addition-curable silicone polymer component (component A + component B).

(E) Benzimidazolone compound: 0.001 to 5 parts by mass with respect to 100 parts by mass of the heat-resistant thermally conductive composition.

(F) Alkyltrialkoxysilane may further be added in an amount of 0.1 to 10 parts by mass with respect to 100 parts by mass of the addition-curable silicone polymer component (component A + component B).

(G) An inorganic particle pigment may further be added in an amount of 0.1 to 10 parts by mass with respect to 100 parts by mass of the addition-curable silicone polymer component (component A + component B).

(H) An organopolysiloxane having no addition curing reaction group may further be added in an amount of 0.5 to 50 parts by mass with respect to 100 parts by mass of the addition-curable silicone polymer (component A + component B).

Hereinafter, each component will be described.

(1) Base polymer component (component A)

The base polymer component is an organopolysiloxane having two or more alkenyl groups bonded to silicon atoms per molecule. The organopolysiloxane containing two or more alkenyl groups is the base resin (base polymer component) of a silicone gel composition of the present invention. In the organopolysiloxane, two or more alkenyl groups having 2 to 8 carbon atoms, and preferably 2 to 6 carbon atoms such as vinyl groups or allyl groups are bonded to the silicon atoms per molecule. The viscosity of the organopolysiloxane is preferably 10 to 100000 mPa·s, and more preferably 100 to 10000 mPa·s at 25°C in terms of workability and curability.

Specifically, an organopolysiloxane expressed by the following general formula (Chemical Formula 2) is used. The organopolysiloxane has an average of two or more alkenyl groups per molecule, in which the alkenyl groups are bonded to silicon atoms at both ends of the molecular chain. The organopolysiloxane is a linear organopolysiloxane whose side chains are blocked with alkyl groups. The viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

[Chemical Formula 2]

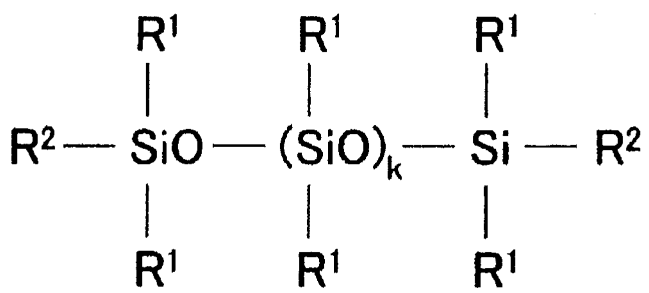

In the general formula, $R^1$ represents substituted or unsubstituted monovalent hydrocarbon groups that are the same as or different from each other and have no aliphatic unsaturated bond, $R^2$ represents alkenyl groups, and k represents 0 or a positive integer. The monovalent hydrocarbon groups represented by $R^1$ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups. The alkenyl groups represented by $R^2$ preferably have 2 to 8 carbon atoms, and more preferably 2 to 6 carbon atoms. Specific examples of the alkenyl groups include vinyl, allyl, propenyl, isopropenyl, butenyl, isobutenyl, hexenyl, and cyclohexenyl groups. In particular, the vinyl group is preferred. In the general formula (Chemical Formula 2), k is typically 0 or a positive integer satisfying $0 \leq k \leq 10000$, preferably $5 \leq k \leq 2000$, and more preferably $10 \leq k \leq 1200$.

The component A may also include an organopolysiloxane having three or more, typically 3 to 30, and preferably about 3 to 20, alkenyl groups bonded to silicon atoms per molecule. The alkenyl groups have 2 to 8 carbon atoms, and preferably 2 to 6 carbon atoms and can be, e.g., vinyl groups or allyl groups. The molecular structure may be a linear, ring, branched, or three-dimensional network structure. The organopolysiloxane is preferably a linear organopolysiloxane in which the main chain is composed of repeating diorganosiloxane units, and both ends of the molecular chain are blocked with triorganosiloxy groups. The viscosity of the linear organopolysiloxane is preferably 10 to 100000 mPa·s, and more preferably 100 to 10000 mPa·s at 25°C.

Each of the alkenyl groups may be bonded to any part of the molecule. For example, the alkenyl group may be bonded to either a silicon atom that is at the end of the molecular chain or a silicon atom that is not at the end (but in the middle) of the molecular chain. In particular, a linear organopolysiloxane expressed by the following general formula (Chemical Formula 3) is preferred. The linear organopolysiloxane has 1 to 3 alkenyl groups on each of the silicon atoms at both ends of the molecular chain. In this case, however, if the total number of the alkenyl groups bonded to the silicon atoms at both ends of the molecular chain is less than 3, at least one alkenyl group is bonded to the silicon atom that is not at the end (but in the middle) of the molecular chain (e.g., as a substituent in the diorganosiloxane unit).

As described above, the viscosity of the linear organopolysiloxane is preferably 10 to 100000 mPa·s at 25°C in terms of workability and curability. Moreover, the linear organopolysiloxane may include a small amount of branched structure (trifunctional siloxane units) in the molecular chain.

[Chemical Formula 3]

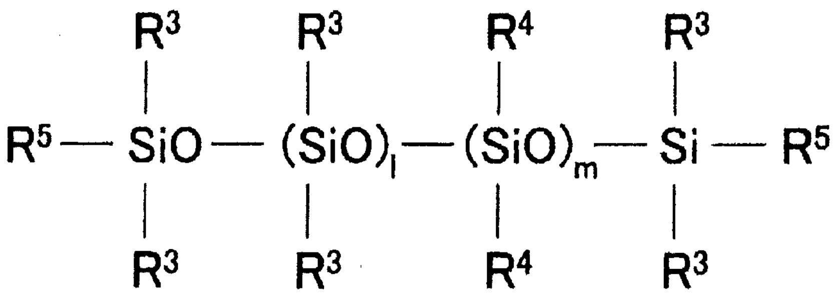

In the general formula, $R^3$ represents substituted or unsubstituted monovalent hydrocarbon groups that are the same as or different from each other, and at least one of them is an alkenyl group, $R^4$ represents substituted or unsubstituted monovalent hydrocarbon groups that are the same as or different from each other and have no aliphatic unsaturated bond, $R^5$ represents alkenyl groups, and 1 and m represent 0 or a positive integer. The monovalent hydrocarbon groups represented by $R^3$ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; alkenyl groups such as vinyl, allyl, propenyl, isopropenyl, butenyl, hexenyl, cyclohexenyl, and octenyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups.

The monovalent hydrocarbon groups represented by $R^4$ also preferably have 1 to 10 carbon atoms, and more preferably 1 to 6 carbon atoms. The monovalent hydrocarbon groups may be the same as the specific examples of $R^1$, but do not include an alkenyl group. The alkenyl groups represented by $R^5$ preferably have 2 to 8 carbon atoms, and more preferably 2 to 6 carbon atoms. Specific examples of the alkenyl groups are the same as those of $R^2$ in the general formula (Chemical Formula 2), and the vinyl group is preferred.

In the general formula, 1 and m are typically 0 or positive integers satisfying $0 < 1 + m \leq 10000$, preferably $5 \leq 1 + m \leq 2000$, and more preferably $10 \leq 1 + m \leq 1200$. Moreover, 1 and m are integers satisfying $0 < l/(l + m) \leq 0.2$, and preferably $0.0011 \leq l/(l + m) \leq 0.1$.

(2) crosslinking component (component B)

The component B is an organohydrogenpolysiloxane that acts as a crosslinking agent. The addition reaction (hydrosilylation) between Sill groups in this component and alkenyl groups in the component A produces a cured product. Any organohydrogenpolysiloxane having two or more hydrogen atoms bonded to silicon atoms (i.e., Sill groups) per molecule may be used. The molecular structure of the organohydrogenpolysiloxane may be a linear, ring, branched, or three-dimensional network structure. The number of silicon atoms in a molecule (i.e., the degree of polymerization) may be 2 to 1000, and preferably about 2 to 300.

The locations of the silicon atoms to which the hydrogen atoms are bonded are not particularly limited. The silicon atoms may be either at the ends or not at the ends (but in the middle) of the molecular chain. The organic groups bonded to the silicon atoms other than the hydrogen atoms may be, e.g., substituted or unsubstituted monovalent hydrocarbon groups that have no aliphatic unsaturated bond, which are the same as those of $R^1$ in the general formula (Chemical Formula 2).

An example of the organohydrogenpolysiloxane of the component B is expressed by the following general formula (Chemical Formula 4).

[Chemical Formula 4]

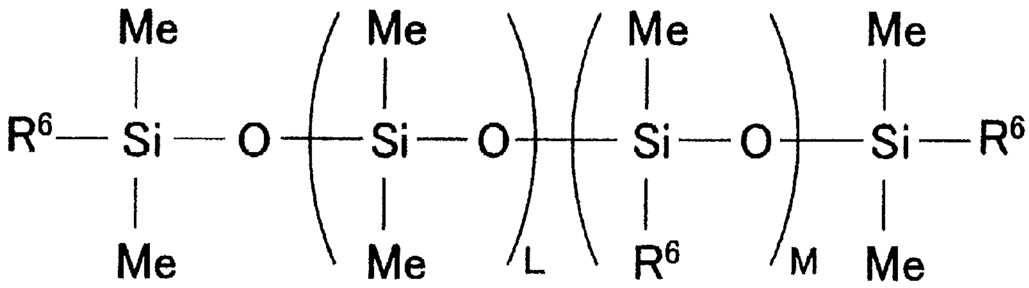

In the above general formula, $R^6$ represents an alkyl group, a phenyl group, an epoxy group, an acryloyl group, a methacryloyl group, an alkoxy group, and a hydrogen atom, which are the same as or different from each other, and at least two of them are hydrogen atoms. L is an integer of 0 to 1000, and preferably 0 to 300, and M is an integer of 1 to 200.

(3) Catalyst component (component C)

The catalyst component of the component C facilitates the curing of the present composition. The component C may be a catalyst used for a hydrosilylation reaction. Examples of the catalyst include platinum group metal catalysts such as platinum-based, palladium-based, and rhodium-based catalysts. The platinum-based catalysts include, e.g., platinum black, chloroplatinic acid (II), chloroplatinic acid, a reaction product of chloroplatinic acid and monohydric alcohol, a complex of chloroplatinic acid and olefin or vinylsiloxane, and platinum bisacetoacetate. The component C is mixed in an amount needed for curing, and the amount can be appropriately adjusted in accordance with a desired curing rate or the like. It is preferable that the component C is added in an amount of 0.01 to 1000 ppm based on the weight of metal atoms with respect to the total amount of the component A and the platinum group metal catalyst.

(4) Thermally conductive particles (component D)

The component D is added preferably in an amount of 100 to 4000 parts by mass with respect to 100 parts by mass of the addition-curable silicone polymer component (the component A + the component B). Thus, the thermal conductivities of the heat-resistant thermally conductive composition and the heat-resistant thermally conductive sheet can be set to 0.8 W/m·K or more. It is preferable that the thermally conductive particles are at least one selected from alumina, zinc oxide, magnesium oxide, aluminum nitride, boron nitride, aluminum hydroxide, and silica. The thermally conductive particles may have various shapes such as spherical, scaly, and polyhedral. The specific surface area of the thermally conductive particles is preferably 0.06 to 15 $m^2/g$. The specific surface area is a BET specific surface area and is measured in accordance with JIS R 1626. The average particle size of the thermally conductive particles is preferably 0.1 to 100 $\mu m$. The average particle size may be measured with a laser diffraction scattering method to determine D50 (median diameter) in a volume-based cumulative particle size distribution. The measuring device may be, e.g., a laser diffraction/scattering particle size distribution analyzer LA-950 S2 manufactured by HORIBA, Ltd.

The thermally conductive particles include at least two types of inorganic particles with different average particle sizes. Thus, small-size, thermally conductive inorganic particles fill the spaces between large-size inorganic particles, which can provide nearly the closest packing and improve thermal conductive properties.

It is preferable that the inorganic particles are surface treated with a silane compound expressed by $R_aSi(OR')_{3-a}$, where R represents a substituted or unsubstituted organic group having 1 to 20 carbon atoms, R' represents an alkyl group having 1 to 4 carbon atoms, and a is 0 or 1, or with its partial hydrolysate. Examples of the alkoxysilane compound (simply referred to as "silane" in the following) include the following: methyltrimethoxysilane; ethyltrimethoxysilane; propyltrimethoxysilane; butyltrimethoxysilane; pentyltrimethoxysilane; hexyltrimethoxysilane; hexyltriethoxysilane; octyltrimethoxysilane; octyltriethoxysilane; decyltrimethoxysilane; decyltriethoxysilane; dodecyltrimethoxysilane; dodecyltriethoxysilane; hexadecyltrimethoxysilane; hexadecyltriethoxysilane; octadecyltrimethoxysilane; and octadecyltriethoxysilane. These silane compounds may be used alone or in combinations of two or more. The alkoxysilane and one-end silanol siloxane may be used together as the surface treatment agent. In this case, the surface treatment may include adsorption in addition to a covalent bond.

(5) Benzimidazolone compound (component E)

The component E may be added in powder form or mixed with a resin to form a masterbatch. The resin used

for the masterbatch is preferably a silicone polymer. The resin may be a curable silicone polymer or a silicone polymer having no reactive group, or a combination of these polymers.

(6) Other additive agents

The composition of the present invention may include components other than the above as needed. For example, the composition may include a heat resistance improver such as colcothar, titanium oxide, or cerium oxide, a flame retardant aid, and a curing retarder. An organic or inorganic particle pigment may be added for coloring and toning. Moreover, alkoxy group-containing silicone may be added, e.g., for the surface treatment of a filler. The organopolysiloxane having no addition curing reaction group may be added. The viscosity of the organopolysiloxane is preferably 10 to 100000 mPa·s, and more preferably 100 to 10000 mPa·s at 25°C in terms of workability.

Examples

Hereinafter, the present invention will be described by way of examples. However, the present invention is not limited to the following examples. Various parameters were measured in the following manner.

<Thermal conductivity>

The thermal conductivity of a heat-resistant thermally conductive silicone gel sheet was measured by a hot disk (in accordance with ISO/CD 22007-2). As shown in FIG. 1A, using a thermal conductivity measuring apparatus 1, a polyimide film sensor 2 was sandwiched between two samples 3a, 3b, and constant power was applied to the sensor 2 to generate a certain amount of heat. Then, the thermal characteristics were analyzed from a temperature rise value of the sensor 2. The sensor 2 has a tip 4 with a diameter of 7 mm. As shown in FIG. 1B, the tip 4 has a double spiral structure of electrodes. Moreover, an electrode 5 for an applied current and an electrode 6 for a resistance value (temperature measurement electrode) are located on the lower portion of the sensor 2. The thermal conductivity was calculated by the following formula (1).

[Formula 1]

$$\lambda = \frac{Po \cdot D(\tau)}{\pi^{3/2} \cdot r} \cdot \frac{D(\tau)}{\Delta T(\tau)}$$

| | |
|---|---|
| $\lambda$: | Thermal conductivity (W/m·K) |
| $P_0$: | Constant power (W) |
| r: | Radius of sensor (m) |
| $\tau$: | $\sqrt{\alpha \cdot t / r^2}$ |
| $\alpha$: | Thermal diffusivity of sample ($m^2$/s) |
| t: | Measuring time (s) |
| $D(\tau)$: | Dimensionless function of $\tau$ |
| $\Delta T(\tau)$: | Temperature rise of sensor (K) |

<Hardness>

The Asker C hardness of the heat-resistant thermally conductive silicone gel sheet was measured in accordance with the Society of Rubber Industry, Japan Standard (SRIS0 101).

<Heat resistance>

The heat-resistant thermally conductive silicone gel sheets were stacked to prepare a test block having a thickness of 10 mm or more. The test block was placed on a wire mesh. In this state, the test block was placed in a hot air circulating oven at 150°C or 220°C. The test block was taken out from the oven after a predetermined time and cooled to a room temperature. Then, the Asker C hardness of the test block was measured in accordance with the Society of

Rubber Industry, Japan Standard (SRIS0 101).
The heat resistance was evaluated with a rate of increase in the Asker C hardness after exposure at 150°C or 220°C.
The rate of increase was calculated by the following formula (Formula 2).

[Formula 2]

$$\text{Rate of increase (\%)} = [\ |B' - B|/|A' - A|\ ] \times 100$$

A: Initial hardness of sample without heat resistance improver
A': Hardness of sample without heat resistance improver after exposure at 150°C or 220°C
B: Initial hardness of sample containing heat resistance improver
B': Hardness of sample containing heat resistance improver after exposure at 150°C or 220°C for same period of time as that of A'
*The composition and the processing method of the sample of A were the same as those of the sample of B except for the presence or absence of the heat resistance improver.

(Examples 1 and 2, Comparative Example 1)

1. Material components

(1) Matrix resin

A two-part addition-curable silicone polymer that becomes a silicone gel after curing was used. One solution (solution A) contained a base polymer component (component A) and a platinum group metal catalyst (component C). The other solution (solution B) contained a base polymer component (component A) and an organohydrogenpolysiloxane that is a crosslinking agent component (component B).

(2) Thermally conductive particles

The thermally conductive particles shown in Table 1 were used. Alumina particles having an average particle size of 10 μm or less was surface treated with a silane coupling agent. This surface treatment prevented a reduction in the curing reaction that is the catalytic ability of the platinum group metal catalyst (component C). In this case, the average particle size means D50 (median diameter) in a volume-based cumulative particle size distribution, which is determined by a particle size distribution measurement with a laser diffraction scattering method. The measuring device may be, e.g., a laser diffraction/scattering particle size distribution analyzer LA-950 S2 manufactured by HORIBA, Ltd. The values in Tables are average particle sizes of each of particles.

(3) Platinum group metal catalyst

A platinum-vinylsiloxane complex was used as a platinum group metal catalyst. As described above, the two-part addition-curable silicone polymer contained the platinum group metal catalyst. In the silicone compositions of the Examples, the amount of the platinum group metal catalyst was 0.01 to 1000 ppm expressed in terms of the weight of platinum atoms with respect to the total amount of the base polymer component (component A) and the platinum group metal catalyst.

(4) Benzimidazolone compound

Pigment Yellow 181 as the benzimidazolone compound was weighed in the amounts shown in Table 1 and added with respect to 100 parts by mass of the heat-resistant thermally conductive composition.

2. Heat-resistant thermally conductive composition

The materials were weighed in the amounts shown in Table 1 and placed in a kneader to form a compound.
Table 1 indicates the amount of each material (parts by mass) with respect to 100 parts by mass (100 g) of the two-part addition-curable silicone polymer. In all the heat-resistant thermally conductive compositions, the amounts of the thermally conductive particles and the other components that were added with respect to 100 parts by mass (100 g) of the two-part addition-curable silicone polymer satisfy their respective preferred amounts of the present invention,

as described above. Comparative Example 1 was performed in the same manner as Example 1 except that the benzimidazolone compound was not added.

3. Sheet forming process

The heat-resistant thermally conductive composition was sandwiched between polyethylene terephthalate (PET) films that had been subjected to a release treatment. The layered material was formed into a sheet with a thickness of 2.0 mm by a roller press. Subsequently, the sheet was heated and cured at 100°C for 15 minutes, resulting in a heat-resistant thermally conductive silicone gel sheet. The heat resistance thereof was evaluated at a temperature of 150°C. Table 1 shows the conditions as described above, and Table 2 shows the results.

[TABLE 1]

| | | | Ex. 1 | Ex. 2 | Comp. Ex. 1 |
|---|---|---|---|---|---|
| Matrix | Two-part addition-curable silicone polymer: Solution A | | 50 | 50 | 50 |
| | Two-part addition-curable silicone polymer: Solution B | | 50 | 50 | 50 |
| Thermally conductive particles | Alumina<br>Average particle size: 0.3 pm<br>BET specific surface area: 6.7m$^2$/g | | 365 | 365 | 365 |
| | Alumina<br>Average particle size: 2.2 pm<br>BET specific surface area: 0.7 m$^2$/g | | 450 | 450 | 450 |
| | Alumina<br>Average particle size: 35 μm<br>BET specific surface area: 0.2 m$^2$/g | | 1265 | 1265 | 1265 |
| Heat resistance improver | Benzimidazolone compound | PY 181 | 1.7 | 3.4 | - |
| Result | Thermal conductivity (W/m·K) [Hot disk] | | 6.0 | 6.0 | 6.0 |
| | Hardness [Asker C] after curing | | 43 | 45 | 40 |
| *-: Not added, Ex.: Example, Comp. Ex.: Comparative Example | | | | | |

[TABLE 2]

| | 150°C Exposure time (hours) | 0 | 60 | 160 | 250 | 500 |
|---|---|---|---|---|---|---|
| Hardness [Asker C] | Ex. 1 | 43 | 64 | 70 | 74 | 84 |
| | Ex. 2 | 45 | 59 | 66 | 69 | 79 |
| | Comp. Ex. 1 | 40 | 79 | 86 | 91 | 91 |
| Rate of increase (%) with respect to rate of increase of Comp. Ex. 1 | Ex. 1 | - | 54 | 59 | 61 | 80 |
| | Ex. 2 | - | 36 | 46 | 47 | 67 |
| *-: Calculation impossible, Ex.: Example, Comp. Ex.: Comparative Example | | | | | | |

(Example 3, Comparative Example 2)

Example 3 and Comparative Example 2 were performed in the same manner as Example 1 except for the amounts of the thermally conductive particles added shown in Table 3. Table 3 shows the conditions, and Table 4 shows the results.

(Comparative Example 3)

Comparative Example 3 was performed in the same manner as Example 1 except that Pigment Yellow 110 (PY 110) that is an isoindolinone pigment expressed by the following formula (Chemical Formula 5), i.e., 4, 5, 6, 7-tetrachloro-3-[[4-[(1-oxo-4, 5, 6, 7-tetrachloro-2H-isoindol-3-ylidene)amino]phenyl]imino]-2H-isoindol-1(3H)-one was added as a pigment. Table 3 shows the conditions, and Table 4 shows the results.

[Chemical Formula 5]

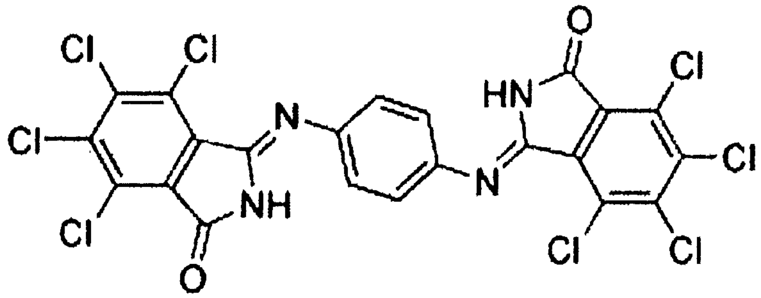

[TABLE 3]

| | | | Ex. 3 | Comp. Ex. 2 | Comp. Ex. 3 |
|---|---|---|---|---|---|
| Matrix | Two-part addition-curable silicone polymer: Solution A | | 50 | 50 | 50 |
| | Two-part addition-curable silicone polymer: Solution B | | 50 | 50 | 50 |
| Thermally conductive particles | Alumina<br>Average particle size: 2 pm<br>BET specific surface area: 0.7 $m^2/g$ | | 360 | 360 | 360 |
| | Alumina<br>Average particle size: 35 μm<br>BET specific surface area: 0.2 $m^2/g$ | | 200 | 200 | 200 |
| | Alumina<br>Average particle size: 75 μm<br>BET specific surface area: 0.2 $m^2/g$ | | 80 | 80 | 80 |
| Heat resistance improver | Benzimidazolone compound | PY 181 | 0.5 | - | - |
| | Isoindolinone compound | PY 110 | 0 | - | 0.5 |
| Result | Thermal conductivity (W/m·K) [Hot disk] | | 1.6 | 1.6 | 1.6 |
| | Hardness [Asker C] after curing | | 12 | 13 | 16 |
| *-: Not added, Ex.: Example, Comp. Ex.: Comparative Example | | | | | |

[TABLE 4]

| | 150°C Exposure time (hours) | 0 | 100 | 250 | 500 | 1000 |
|---|---|---|---|---|---|---|
| Hardness [Asker C] | Ex. 3 | 12 | 9 | 13 | 20 | 26 |
| | Comp. Ex. 2 | 13 | 13 | 19 | 31 | 42 |
| | Comp. Ex. 3 | 16 | 18 | 38 | N/A | N/A |
| Rate of increase (%) with respect to rate of increase of Comp. Ex. 2 | Ex. 3 | - | - | 17 | 44 | 48 |
| | Comp. Ex. 3 | - | - | 367 | - | - |
| *N/A: No data, -: Calculation impossible, Ex.: Example, Comp. Ex.: Comparative Example | | | | | | |

(Example 4, Comparative Example 4)

Example 4 and Comparative Example 4 were performed in the same manner as Example 1 except for the amounts of the thermally conductive particles and the additive agent that were added shown in Table 5. Table 5 shows the conditions, and Table 6 shows the results. In Example 4 and Comparative Example 4, not only alumina particles but also aluminum nitride was mixed. Moreover, a dimethyl silicone polymer (viscosity of 100 mPa·s) was added as an additive agent for adjusting the hardness properties.

[TABLE 5]

| | | | Ex. 4 | Comp. Ex. 4 |
|---|---|---|---|---|
| Matrix | Two-part addition-curable silicone polymer: Solution A<br>Two-part addition-curable silicone polymer: Solution B | | 50<br>50 | 50<br>50 |
| Thermally conductive particles | Alumina<br>Average particle size: 0.3 pm<br>BET specific surface area: 6.7 $m^2/g$ | | 375 | 375 |
| | Alumina<br>Average particle size: 2 pm<br>BET specific surface area: 0.7 $m^2/g$ | | 680 | 680 |
| | Alumina<br>Average particle size: 75 μm<br>BET specific surface area: 0.2 $m^2/g$ | | 1335 | 1335 |
| | Aluminum nitride<br>Average particle size: 15 μm<br>BET specific surface area: 0.5 $m^2/g$ | | 375 | 375 |
| Additive agent | Dimethyl silicone polymer | | 40 | 40 |
| Heat resistance improver | Benzimidazolone compound | PY 181 | 4.0 | - |
| Result | Thermal conductivity (W/m·K) [Hot disk] | | 8.0 | 8.0 |
| | Hardness [Asker C] after curing | | 38 | 41 |
| *-: Not added, Ex.: Example, Comp. Ex.: Comparative Example | | | | |

[TABLE 6]

| | 150°C Exposure time (hours) | 0 | 100 | 250 | 500 |
|---|---|---|---|---|---|
| Hardness [Asker C] | Ex. 4 | 38 | 72 | 76 | 80 |
| | Comp. Ex. 4 | 41 | 87 | 93 | N/A |
| Rate of increase (%) with respect to rate of increase of Comp. Ex. 4 | Ex. 4 | - | 74 | 73 | - |
| *N/A: No data, -: Calculation impossible, Ex.: Example, Comp. Ex.: Comparative Example | | | | | |

(Examples 5-9, Comparative Examples 5-7)

In Examples 5-9 and Comparative Examples 5-7, sheets were produced in the same manner as in Example 1 except for the types and the amounts of the thermally conductive particles and the heat resistance improver that were added shown in Table 7. The heat resistances thereof were evaluated at a temperature of 220°C. Tables 7 and 8 show the conditions, and Table 9 shows the results.

In Comparative Example 5 (an anthraquinone compound was added), curing failure occurred, and the sheet hardness was decreased.

[TABLE 7]

| | | | Ex. 5 | Ex. 6 | Ex. 7 | Ex. 8 | Ex. 9 |
|---|---|---|---|---|---|---|---|
| Matrix | Two-part addition-curable silicone polymer: Solution A | | 50 | 50 | 50 | 50 | 50 |
| | Two-part addition-curable silicone polymer: Solution B | | 50 | 50 | 50 | 50 | 50 |
| Thermally conductive particles | Alumina<br>Average particle size: 35 μm<br>BET specific surface area: 0.2 m2/g | | 600 | 600 | 600 | 600 | 600 |
| Heat resistance improver | Benzimidazolone compound | PY 181 | 1.5 | - | - | - | - |
| | | PR 176 | - | 1.5 | - | - | - |
| | | PR 208 | - | - | 1.5 | - | - |
| | | PBr 25 | - | - | - | 1.5 | - |
| | | PO 36 | - | - | - | - | 1.5 |
| Result | Thermal conductivity (W/m·K) [Hot disk] | | 1.7 | 1.7 | 1.7 | 1.7 | 1.7 |
| | Hardness [Asker C] after curing | | 32 | 33 | 33 | 33 | 33 |
| *-: Not added, Ex.: Example | | | | | | | |

[TABLE 8]

| | | Comp. Ex. 5 | Comp. Ex. 6 | Comp. Ex. 7 |
|---|---|---|---|---|
| Matrix | Two-part addition-curable silicone polymer: Solution A | 50 | 50 | 50 |
| | Two-part addition-curable silicone polymer: Solution B | 50 | 50 | 50 |

(continued)

| | | | Comp. Ex. 5 | Comp. Ex. 6 | Comp. Ex. 7 |
|---|---|---|---|---|---|
| Thermally conductive particles | Alumina<br>Average particle size: 35 μm<br>BET specific surface area: 0.2 $m^2/g$ | | 600 | 600 | 600 |
| Heat resistance improver | Anthraquinone compound | PB 60 | 1.5 | - | - |
| | Phthalocyanine | PB 16 | - | 1.0 | - |
| Result | Thermal conductivity (W/m·K) [Hot disk] | | 1.7 | 1.7 | 1.7 |
| | Hardness [Asker C] after curing | | 13 | 33 | 25 |
| *-: Not added, Comp. Ex.: Comparative Example | | | | | |

[TABLE 9]

| | 220°C Exposure time (hours) | 0 | 100 | 250 | 500 | 1000 |
|---|---|---|---|---|---|---|
| Hardness [Asker C] | Ex. 5 | 32 | 31 | 31 | 41 | 58 |
| | Ex. 6 | 33 | 32 | 31 | 30 | 36 |
| | Ex. 7 | 33 | 30 | 29 | 37 | 55 |
| | Ex. 8 | 33 | 30 | 26 | 26 | 28 |
| | Ex. 9 | 33 | 30 | 27 | 25 | 27 |
| | Comp. Ex. 5 | 13 | 13 | 20 | 30 | 48 |
| | Comp. Ex. 6 | 33 | 22 | 55 | 77 | 86 |
| | Comp. Ex. 7 | 25 | 19 | 92 | 94 | 95 |
| Rate of increase (%) with respect to rate of increase of Comp. Ex. 7 | Ex. 5 | - | 17 | 1 | 13 | 37 |
| | Ex. 6 | - | 17 | 3 | 4 | 4 |
| | Ex. 7 | - | 50 | 6 | 6 | 31 |
| | Ex. 8 | - | 50 | 10 | 10 | 7 |
| | Ex. 9 | - | 50 | 9 | 12 | 9 |
| | Comp. Ex. 5 | - | 0 | 10 | 25 | 50 |
| | Comp. Ex. 6 | - | 183 | 33 | 64 | 76 |
| *-: Calculation impossible, Ex.: Example, Comp. Ex.: Comparative Example | | | | | | |

(Examples 10-14, Comparative Example 7)

Examples 10-14 and Comparative Example 7 were performed in the same manner as Example 1 except for the amounts of the thermally conductive particles and the heat resistance improver that were added shown in Table 7. The heat resistances thereof were evaluated at a temperature of 220°C. Table 10 shows the conditions, and Table 11 shows the results.

[TABLE 10]

| | | | Ex. 10 | Ex. 11 | Ex. 12 | Ex. 13 | Comp. Ex. 7 |
|---|---|---|---|---|---|---|---|
| Matrix | Two-part addition-curable silicone polymer: Solution A | | 50 | 50 | 50 | 50 | 50 |
| | Two-part addition-curable silicone polymer: Solution B | | 50 | 50 | 50 | 50 | 50 |
| Thermally conductive particles | Alumina<br>Average particle size: 35 μm<br>BET specific surface area: 0.2 m2/g | | 600 | 600 | 600 | 600 | 600 |
| Heat resistance improver | Benzimidazolone compound | PR 176 | 0.05 | 0.10 | 0.50 | 5.0 | - |
| Result | Thermal conductivity (W/m·K) [Hot disk] | | 1.7 | 1.7 | 1.7 | 1.7 | 1.7 |
| | Hardness [Asker C] after curing | | 30 | 29 | 29 | 29 | 25 |
| *-: Not added, Ex.: Example, Comp. Ex.: Comparative Example | | | | | | | |

[TABLE 11]

| | 220°C Exposure time (hours) | 0 | 100 | 250 | 500 | 1000 |
|---|---|---|---|---|---|---|
| Hardness [Asker C] | Ex. 10 | 30 | 24 | 18 | 18 | 25 |
| | Ex. 11 | 29 | 26 | 21 | 20 | 22 |
| | Ex. 12 | 29 | 26 | 20 | 18 | 23 |
| | Ex. 13 | 29 | 30 | 30 | 33 | 55 |
| | Comp. Ex. 7 | 25 | 19 | 92 | 94 | 95 |
| Rate of increase (%) with respect to rate of increase of Comp. Ex. 7 | Ex. 10 | - | 100 | 18 | 17 | 7 |
| | Ex. 11 | - | 50 | 12 | 13 | 10 |
| | Ex. 12 | - | 50 | 13 | 16 | 9 |
| | Ex. 13 | - | 17 | 1 | 6 | 37 |
| *-: Calculation impossible, Ex.: Example, Comp. Ex.: Comparative Example | | | | | | |

As in the above examples, it was confirmed that the heat resistances of the thermally conductive compositions and the thermally conductive sheets were improved by adding the benzimidazolone compound.

Industrial Applicability

The heat-resistant thermally conductive composition and the heat-resistant thermally conductive sheet of the present invention are suitable for being interposed between a heat generating part and a heat dissipater of an electrical component, an electronic component or the like. In particular, the heat-resistant thermally conductive composition and the heat-resistant thermally conductive sheet use the heat resistance improver containing no metal atom and are less likely to become hard at high temperature.
Thus, they are largely advantageous for electrical components and electronic components.

Description of Reference Numerals

| | |
|---|---|
| 1 | Thermal conductivity measuring apparatus |
| 2 | Sensor |
| 3a, 3b | Sample |
| 4 | Tip of the sensor |
| 5 | Electrode for applied current |
| 6 | Electrode for resistance value (temperature measurement electrode) |

**Claims**

**1.** A heat-resistant thermally conductive composition comprising:

a matrix resin; and
thermally conductive particles,
wherein the heat-resistant thermally conductive composition contains a benzimidazolone compound as a heat resistance improver, and
the thermally conductive particles are added in an amount of 100 to 4000 parts by mass with respect to 100 parts by mass of the matrix resin.

**2.** The heat-resistant thermally conductive composition according to claim 1,
wherein the benzimidazolone compound is added in an amount of 0.001 to 5 parts by mass with respect to 100 parts by mass of the heat-resistant thermally conductive composition.

**3.** The heat-resistant thermally conductive composition according to claim 1 or 2, wherein the matrix resin is a silicone polymer.

**4.** The heat-resistant thermally conductive composition according to any of claims 1 to 3, wherein the benzimidazolone compound is a benzimidazolone pigment.

**5.** The heat-resistant thermally conductive composition according to any of claims 1 to 4, further comprising a curing catalyst,
wherein the matrix resin is an addition-curable silicone polymer.

**6.** The heat-resistant thermally conductive composition according to any of claims 1 to 5, wherein the heat-resistant thermally conductive composition has an Asker C hardness of 70 or less after curing.

**7.** The heat-resistant thermally conductive composition according to any of claims 1 to 6, wherein the thermally conductive particles are at least one selected from alumina, zinc oxide, magnesium oxide, aluminum nitride, boron nitride, aluminum hydroxide, and silica.

**8.** The heat-resistant thermally conductive composition according to any of claims 1 to 7, wherein part or all of the thermally conductive particles are surface treated with a silane coupling agent.

**9.** The heat-resistant thermally conductive composition according to claim 8,
wherein the silane coupling agent is added in an amount of 0.01 to 10 parts by mass with respect to 100 parts by mass of the thermally conductive particles when the matrix resin, the curing catalyst, and the thermally conductive particles are mixed.

**10.** The heat-resistant thermally conductive composition according to any of claims 1 to 9,
wherein the heat-resistant thermally conductive composition comprises the following components (A) to (E), and is cured:

(A) a base polymer component: an organopolysiloxane having an average of two or more silicon atoms bonded to alkenyl groups per molecule;
(B) a crosslinking component: an organopolysiloxane having an average of two or more silicon atoms bonded to hydrogen atoms per molecule, in which an amount of the organopolysiloxane is 0.01 to 3 mol with respect to 1 mol of the alkenyl groups bonded to the silicon atoms in the component A;
(C) a catalyst component: a platinum group metal catalyst, in which an amount of the platinum group metal

catalyst is 0.01 to 1000 ppm in terms of a weight unit of metal atoms with respect to a total amount of the component A and the platinum group metal catalyst;
(D) thermally conductive particles: 100 to 4000 parts by mass with respect to 100 parts by mass of an addition-curable silicone polymer component (the component A + the component B); and
(E) a benzimidazolone compound: 0.001 to 5 parts by mass with respect to 100 parts by mass of the heat-resistant thermally conductive composition.

**11.** The heat-resistant thermally conductive composition according to any of claims 1 to 10, wherein the heat resistance improver contains no metal atom.

**12.** A heat-resistant thermally conductive sheet comprising the heat-resistant thermally conductive composition, according to any of claims 1 to 11, in the form of a sheet.

**13.** The heat-resistant thermally conductive sheet according to claim 12, wherein the heat-resistant thermally conductive sheet has a thermal conductivity of 0.8 W/m·K or more.

**14.** The heat-resistant thermally conductive sheet according to claim 12 or 13,
wherein the heat-resistant thermally conductive sheet has a thickness of 0.2 to 10 mm.

**15.** Use of the heat-resistant thermally conductive composition according to any of claims 1 to 11, or the heat-resistant thermally conductive sheet according to any one of claims 12 to 14.

**Patentansprüche**

**1.** Hitzebeständige wärmeleitfähige Zusammensetzung mit:

einem Matrixharz; und
wärmeleitfähigen Partikeln,
wobei die hitzebeständige wärmeleitfähige Zusammensetzung eine Benzimidazolon-Verbindung als Hitzebeständigkeits-Verbesserer enthält, und die wärmeleitfähigen Partikel in einer Menge von 100 bis 4000 Massenteilen bezogen auf 100 Massenteile des Matrixharzes zugefügt werden.

**2.** Hitzebeständige wärmeleitfähige Zusammensetzung gemäß Anspruch 1, wobei die Benzimidazolon-Verbindung in einer Menge von 0,001 bis 5 Massenteilen bezogen auf 100 Massenteile der hitzebeständigen wärmeleitfähigen Zusammensetzung zugefügt wird.

**3.** Hitzebeständige wärmeleitfähige Zusammensetzung gemäß Anspruch 1 oder 2, wobei das Matrixharz ein Siliconpolymer ist.

**4.** Hitzebeständige wärmeleitfähige Zusammensetzung gemäß einem der Ansprüche 1 bis 3, wobei die Benzimidazolon-Verbindung ein Benzimidazolon-Pigment ist.

**5.** Hitzebeständige wärmeleitfähige Zusammensetzung gemäß einem der Ansprüche 1 bis 4, ferner enthaltend einen Härtungskatalysator,
wobei das Matrixharz ein Additions-härtbares Siliconpolymer ist.

**6.** Hitzebeständige wärmeleitfähige Zusammensetzung gemäß einem der Ansprüche 1 bis 5, wobei die hitzebeständige wärmeleitfähige Zusammensetzung eine Asker-C-Härte von 70 oder weniger nach dem Härten aufweist.

**7.** Hitzebeständige wärmeleitfähige Zusammensetzung gemäß einem der Ansprüche 1 bis 6, wobei die wärmeleitfähigen Partikel wenigstens ein Ausgewähltes aus der Gruppe sind, die aus Alumina, Zinkoxid, Magnesiumoxid, Aluminiumnitrid, Bornitrid, Aluminiumhydroxid und Silica besteht.

**8.** Hitzebeständige wärmeleitfähige Zusammensetzung gemäß einem der Ansprüche 1 bis 7, wobei ein Teil der oder alle wärmeleitfähigen Partikel mit einem Silan-Kopplungsagens oberflächenbehandelt sind.

**9.** Hitzebeständige wärmeleitfähige Zusammensetzung gemäß Anspruch 8, wobei das Silan-Kopplungsagens in einer

Menge von 0,01 bis 10 Massenteilen bezogen auf 100 Massenteile der wärmeleitfähigen Partikel zugefügt wird, wenn das Matrixharz, der Härtungskatalysator und die wärmeleitfähigen Partikel vermischt werden.

**10.** Hitzebeständige wärmeleitfähige Zusammensetzung gemäß einem der Ansprüche 1 bis 9, wobei die hitzebeständige wärmeleitfähige Zusammensetzung die folgenden Komponenten (A) bis (E) beinhaltet, und gehärtet wird:

(A) eine Basispolymerkomponente: ein Organopolysiloxan mit im Durchschnitt zwei oder mehr an Alkenylgruppen gebundenen Siliciumatomen pro Molekül;
(B) eine Vernetzerkomponente: ein Organopolysiloxan mit im Durchschnitt zwei oder mehr an Wasserstoffatome gebundenen Siliciumatomen pro Molekül, wobei eine Menge des Organopolysiloxans 0,01 bis 3 Mol bezogen auf 1 Mol der an die Siliciumgruppen gebundenen Alkenylgruppen in der Komponente A ist;
(C) eine Katalysatorkomponente: ein Platingruppenmetall-Katalysator, wobei eine Menge des Platingruppenmetall-Katalysators 0,01 bis 1000 ppm in Gewichtseinheiten der Metallatome bezogen auf eine Gesamtmenge der Komponente A und des Platingruppenmetall-Katalysators ist;
(D) wärmeleitfähige Partikel: 100 bis 4000 Massenteile bezogen auf 100 Massenteile einer Additions-härtbaren Siliconpolymer-Komponente (die Komponente A + die Komponente B); und
(E) eine Benzimidazolon-Verbindung: 0,001 bis 5 Massenteile bezogen auf 100 Massteile der hitzebeständigen wärmeleitfähigen Zusammensetzung.

**11.** Hitzebeständige wärmeleitfähige Zusammensetzung gemäß einem der Ansprüche 1 bis 10, wobei der Hitzebeständigkeits-Verbesserer kein Metallatom beinhaltet.

**12.** Hitzebeständige wärmeleitfähige Folie beinhaltend die hitzebeständige wärmeleitfähige Zusammensetzung gemäß einem der Ansprüche 1 bis 11 in Form einer Folie.

**13.** Hitzebeständige wärmeleitfähige Folie gemäß Anspruch 12, wobei die hitzebeständige wärmeleitfähige Folie eine Wärmeleitfähigkeit von 0,8 W/m·K oder mehr aufweist.

**14.** Hitzebeständige wärmeleitfähige Folie gemäß Anspruch 12 oder 13, wobei die hitzebeständige wärmeleitfähige Folie eine Dicke von 0,2 bis 10 mm aufweist.

**15.** Verwendung der hitzebeständigen wärmeleitfähigen Zusammensetzung gemäß einem der Ansprüche 1 bis 11, oder der hitzebeständigen wärmeleitfähigen Folie gemäß einem der Ansprüche 12 bis 14.

## Revendications

**1.** Composition thermoconductrice résistante à la chaleur comprenant :

une résine matricielle ; et
des particules thermoconductrices,
dans laquelle la composition thermoconductrice résistante à la chaleur contient un composé benzimidazolone en tant qu’améliorant de résistance à la chaleur, et
les particules thermoconductrices sont ajoutées en une quantité de 100 à 4 000 parties en masse par rapport à 100 parties en masse de la résine matricielle.

**2.** Composition thermoconductrice résistante à la chaleur selon la revendication 1, dans laquelle le composé benzimidazolone est ajouté en une quantité de 0,001 à 5 parties en masse par rapport à 100 parties en masse de la composition thermoconductrice résistante à la chaleur.

**3.** Composition thermoconductrice résistante à la chaleur selon la revendication 1 ou 2, dans laquelle la résine matricielle est un polymère de silicone.

**4.** Composition thermoconductrice résistante à la chaleur selon l’une quelconque des revendications 1 à 3, dans laquelle le composé benzimidazolone est un pigment benzimidazolone.

**5.** Composition thermoconductrice résistante à la chaleur selon l’une quelconque des revendications 1 à 4, comprenant en outre un catalyseur de durcissement, dans laquelle la résine matricielle est un polymère de silicone durcissable

par addition.

6. Composition thermoconductrice résistante à la chaleur selon l'une quelconque des revendications 1 à 5, dans laquelle la composition thermoconductrice résistante à la chaleur a une dureté Asker C égale ou inférieure à 70 après durcissement.

7. Composition thermoconductrice résistante à la chaleur selon l'une quelconque des revendications 1 à 6, dans laquelle les particules thermoconductrices sont au moins l'un choisi parmi alumine, oxyde de zinc, oxyde de magnésium, nitrure d'aluminium, nitrure de bore, hydroxyde d'aluminium et silice.

8. Composition thermoconductrice résistante à la chaleur selon l'une quelconque des revendications 1 à 7, dans laquelle une partie ou la totalité des particules thermoconductrices sont traitées en surface avec un agent de couplage silane.

9. Composition thermoconductrice résistante à la chaleur selon la revendication 8, dans laquelle l'agent de couplage silane est ajouté en une quantité de 0,01 à 10 parties en masse par rapport à 100 parties en masse des particules thermoconductrices lorsque la résine matricielle, le catalyseur de durcissement et les particules thermoconductrices sont mélangés.

10. Composition thermoconductrice résistante à la chaleur selon l'une quelconque des revendications 1 à 9, dans laquelle la composition thermoconductrice résistante à la chaleur comprend les composants (A) à (E) suivants, et est durcie :

(A) un composant polymère de base : un organopolysiloxane ayant une moyenne d'au moins deux atomes de silicium liés à des groupes alcényle par molécule ;
(B) un composant de réticulation : un organopolysiloxane ayant une moyenne d'au moins deux atomes de silicium liés à des atomes d'hydrogène par molécule, dans laquelle une quantité d'organopolysiloxane va de 0,01 à 3 moles par rapport à 1 mole des groupes alcényles liés aux atomes de silicium dans le composant A ;
(C) un composant catalyseur : un catalyseur métallique du groupe du platine, dans laquelle une quantité du catalyseur métallique du groupe du platine va de 0,01 à 1 000 ppm en termes d'une unité pondérale d'atomes métalliques par rapport à une quantité totale du composant A et du catalyseur métallique du groupe du platine ;
(D) des particules thermoconductrices : 100 à 4 000 parties en masse par rapport à 100 parties en masse d'un composant polymère de silicone durcissable par addition (le composant A + le composant B) ; et
(E) un composé benzimidazolone : 0,001 à 5 parties en masse par rapport à 100 parties en masse de la composition thermoconductrice résistante à la chaleur.

11. Composition thermoconductrice résistante à la chaleur selon l'une quelconque des revendications 1 à 10, dans laquelle l'améliorant de résistance à la chaleur ne contient aucun atome métallique.

12. Feuille thermoconductrice résistante à la chaleur comprenant la composition thermoconductrice résistante à la chaleur selon l'une quelconque des revendications 1 à 11 sous la forme d'une feuille.

13. Feuille thermoconductrice résistante à la chaleur selon la revendication 12, dans laquelle la feuille thermoconductrice résistante à la chaleur a une conductivité thermique égale ou supérieure à 0,8 W/m-K.

14. Feuille thermoconductrice résistante à la chaleur selon la revendication 12 ou 13, dans laquelle la feuille thermoconductrice résistante à la chaleur a une épaisseur de 0,2 à 10 mm.

15. Utilisation de la composition thermoconductrice résistante à la chaleur selon l'une quelconque des revendications 1 à 11, ou de la feuille thermoconductrice résistante à la chaleur selon l'une quelconque des revendications 12 à 14.

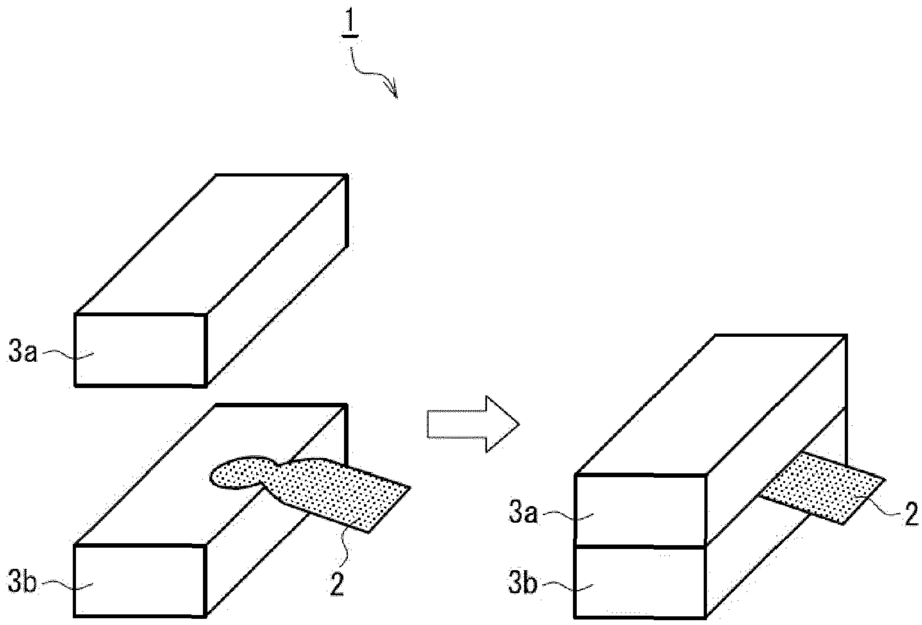


FIG. 1A

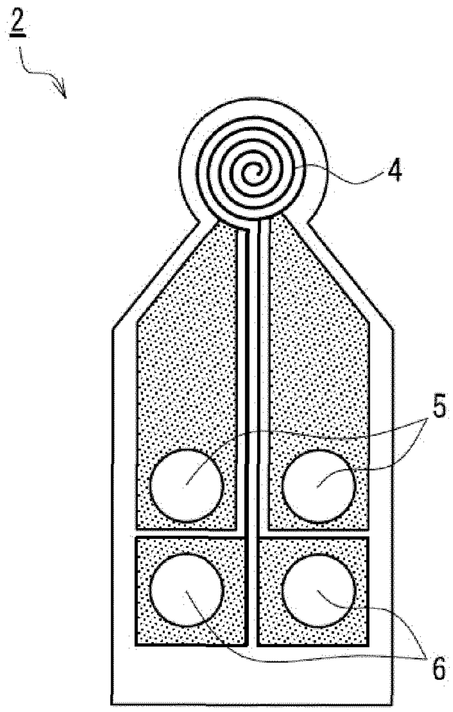


FIG. 1B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018016566 A1
- JP 5931129 B
- WO 2018074247 A1
- JP 2017210518 A
- EP 3467044 A1